# EUROPEAN PATENT APPLICATION

(11) **EP 2 484 646 A1**
(43) Date of publication of application: **08.08.2012**
(21) Application number: 10820739.0
(22) Date of filing: 28.09.2010
(51) Int. Cl.: C03C 8/02, B01D 53/94, B01J 23/04, F01N 3/10

(54) **GLASS FRIT AND METHOD FOR OXIDATION OF CARBON MICROPARTICLES USING SAME**

(30) Priority: 30.09.2009 JP 2009226645
(71) Applicant: Sumitomo Chemical Co., Ltd, Chuo-ku, Tokyo 104-8260 (JP)
(72) Inventor: IWASAKI, Kentaro, Niihama-shi Ehime 792-0025 (JP); NEMOTO, Akiyoshi, Tsukuba-shi Ibaraki 305-0046 (JP); TOHMA, Tetsuro, Niihama-shi Ehime 792-0002 (JP)
(74) Representative: Vossius & Partner
(86) International application number: PCT/JP2010/067320
(87) International publication number: WO 2011/040627

(57) **Abstract**

The present invention is a glass frit comprising 60 to 80 % by weight of SiO₂, 9 to 20 % by weight of Al₂O₃, 3 to 12 % by weight of K₂O, and 3 to 12 % by weight of Na₂O, expressed on oxide basis.

## Description

### TECHNICAL FIELD

The present invention relates to glass frit and a process for oxidizing carbon microparticles using the same.

### BACKGROUND ART

As a process for oxidizing carbon microparticles into carbon dioxide, a process has been known in which carbon microparticles are brought into contact with an oxidation catalyst in the presence of molecular oxygen, wherein the carbon microparticles are contained in exhaust gas from internal combustion engines, incinerators, petroleum refining facilities, external combustion engines, and the like. As the catalyst, a catalyst is known in which noble metal particles are deposited on a carrier. Platinum and the like are used as the noble metal, and a crystalline carrier of zirconia, silica, alumina, and the like are used as the carrier (see, Japanese Patent Application Laid-Open No. 2002-85587).

In such a conventional catalyst, a noble metal is used, and therefore, the production cost of the conventional catalyst is high.

### DISCLOSURE OF THE INVENTION

The present invention provides the following terms of <1>, <2>, <3>.
<1> Glass frit comprising 60 to 80 % by weight of SiO₂, 9 to 20 % by weight of Al₂O₃, 3 to 12 % by weight of K₂O, and 3 to 12 % by weight of Na₂O, expressed on oxide basis.
<2> Glass frit according to <1>, comprising not more than 0.1 % by weight of CaO expressed on oxide basis.
<3> A process for oxidizing carbon microparticles, comprising heating carbon microparticles in the co-presence of the glass frit according to <1> or <2>, and molecular oxygen.

The glass frit of the present invention is economical since it contains no noble metal. The glass frit of the invention also serves efficiently as an oxidation catalyst for carbon microparticles. Carbon microparticles can be oxidized at a relatively low temperature by heating the carbon microparticles in the co-presence of the glass frit of the present invention and molecular oxygen.

### BEST MODE FOR CARRYING OUT THE INVENTION

### (Glass frit)

Glass frit means flaky or powdery glass. The glass frit of the present invention contains 60 to 75 % by weight of SiO₂, 9 to 20 % by weight of Al₂O₃, 3 to 12 % by weight of K₂O, and 4 to 12 % by weight of Na₂O, expressed on oxide basis. When the contents are out of the ranges, the glass frit becomes inferior in the function as an oxidation catalyst of carbon microparticles.

The glass frit of the present invention may also contain elements other than silicon, aluminum, potassium, sodium, and oxygen. In the case where the glass frit of the invention contains calcium as an element, the glass frit of the invention is preferable to contain less than 0.1 % by weight of CaO expressed on oxide basis. When the glass frit of the invention contains less than 0.1 % by weight of CaO, it can oxidize carbon microparticles at a further low temperature.

### (Production process)

The glass frit of the present invention may be produced by a common melting-quenching-pulverizing method. That is, main starting materials and other auxiliary starting materials are loaded together to a container such as a platinum crucible, melted by heating in a melting furnace at a temperature higher than the melting point of glass by 200 to 300°C, and the obtained melt is sufficiently made homogeneous. The main starting materials in this process are such as silicon oxide, alumina, alkali metal compounds (e.g., alkali metal carbonates such as sodium carbonate and potassium carbonate), and they are constituting glass. Thereafter, the obtained homogeneous melt is vitrified by cast into water and cooling, for example, and the obtained glass is pulverized to produce glass frit. Auxiliary starting materials influence on the physical property values of glass such as melting point, crystallization temperature, thermal expansion coefficient, dielectric constant, and the like. The auxiliary starting materials for glass are not particularly limited as long as they are substances other than the main starting materials and those which may change the physical properties of the glass. The examples thereof include CaO, MgO, ZnO, ZrO₂, F, and B₂O₃. Note that the melting point of glass means a temperature at which the viscosity thereof becomes 10⁴ dpa/s or lower.

### (Process for oxidizing carbon microparticles)

The glass frit of the present invention can be used as an oxidation catalyst for carbon microparticles. The process for oxidizing carbon microparticles in the present invention is a process of heating carbon microparticles in the co-presence of molecular oxygen and the glass frit of the present invention. In the process, it is preferable that the glass frit of the present invention and carbon microparticles are brought into contact with each other at the time of heating carbon microparticles. The glass frit of the present invention efficiently serves as an oxidation catalyst for carbon microparticles. In the process of the present invention, carbon microparticles can be oxidized at a relatively low temperature of about 600 to 650°C.

### EXAMPLES

Hereinafter, the present invention will be described in detail with reference to examples; however the invention should not be limited only to the following examples.

### (Production of glass frit A, B, C, and D)

Respective raw materials of glass frit were mixed so as to provide the weight ratios of the elements as listed in Table 1. The obtained mixtures were melted by heating, and the obtained melts were sufficiently homogenized. The obtained homogeneous melt was vitrified by cooling, and each of the obtained glass was pulverized to provide glass frit A, B, C, and D as listed in Table 1.

**Table 1**

| | Catalyst | Composition (wt%) | | | | | | | Starting temperature of oxidation (°C) |
|---|---|---|---|---|---|---|---|---|---|
| | | SiO₂ | Al₂O₃ | MgO | CaO | Na₂O | K₂O | ZrO₂ | |
| Example1 | Glass frit A | 62.0 | 17.5 | | | 10.9 | 0.5 | | 594 |
| Example2 | Glass frit B | 10.0 | 10.0 | 1.0 | | 5.0 | 10.0 | | 59.5 |
| Example3 | Glass frit C | 77.9 | 9.6 | 2.9 | 2.7 | 3.1 | 7.5 | | 650 |
| Comparative Example1 | Glass frit D | 64.1 | 16.2 | | | 22.3 | | 5.5 | 704 |
| Comparative Example2 | Fukushima Feldspar | 58.1 | 26.4 | | 0.4 | 4.9 | 10.3 | | 731 |
| Reference Example | --- | | | | | | | | 697 |

### (Example 1)

A sample was obtained by mixing 4.5 g of the glass frit A and 0.5 g of a carbon black powder (product name: "Denka Black", manufactured by Denki Kagaku Kogyo K.K., average particle diameter: 36 nm) in a mortar. In the obtained sample, the glass frit and the carbon black powder were brought into contact with each other. In order to confirm the carbon oxidation temperature of the sample, the starting temperature of carbon oxidation was investigated using a thermogravimetric (TG-DTA) measurement ("TG/DTA 6300" manufactured by SII Nano Technology Inc.) by heating from room temperature to 800°C at a heating rate of 10°C /minute and a flow rate of 200 ml/minute in atmospheric air. The starting temperature of carbon oxidation was found 594°C.

### (Example 2)

The starting temperature of carbon oxidation was investigated in the same manner as in Example 1, except that the glass frit B was used in place of the glass frit A. The starting temperature of carbon oxidation was found 595°C.

### (Example 3)

The starting temperature of carbon oxidation was investigated in the same manner as in Example 1, except that the glass frit C was used in place of the glass frit A. The starting temperature of carbon oxidation was found 650°C.

### (Comparative Example 1)

The starting temperature of carbon oxidation was investigated in the same manner as in Example 1, except that the glass frit D was used in place of the glass frit A. The starting temperature of carbon oxidation was found 704°C.

### (Comparative Example 2)

The starting temperature of carbon oxidation was investigated in the same manner as in Example 1, except that Fukushima Feldspar (manufactured by Tokai Ceramics Co., Ltd.) was used in place of the glass frit A. The starting temperature of carbon oxidation was found 731°C.

### (Reference Example)

The starting temperature of carbon oxidation was investigated for a carbon black powder (product name "Denka Black", manufactured by Denki Kagaku Kogyo K.K., average particle diameter: 36 nm) using a thermogravimetric (TG-DTA) measurement by heating from room temperature to 800°C at a heating rate of 10°C /minute. The starting temperature of carbon oxidation was found 697°C.

### INDUSTRIAL APPLICABILITY

The glass frit of the present invention is economical since it contains no noble metal. The glass frit of the present invention can be used as a catalyst for oxidizing carbon microparticles at a low temperature. The glass frit of the present invention is therefore highly industrially applicable.

## Claims

1. Glass frit comprising 60 to 80 % by weight of SiO₂, 9 to 20 % by weight of Al₂O₃, 3 to 12 % by weight of K₂O, and 3 to 12 % by weight of Na₂O, expressed on oxide basis.

2. Glass frit according to claim 1, comprising not more than 0.1 % by weight of CaO expressed on oxide basis.

3. A process for oxidizing carbon microparticles, comprising heating carbon microparticles in the co-presence of the glass frit according to claim 1. or 2, and molecular oxygen.
